# FASCICULE DE BREVET EUROPEEN

(11) **EP 1 036 960 B1**
(45) Date de publication et mention de la délivrance du brevet: **20.11.2002**
(21) Numéro de dépôt: 00400671.4
(22) Date de dépôt: 10.03.2000
(51) Int. Cl.: F16H 61/36, F16C 1/10

(54) **Dispositif de montage et de démontage d'un câble de transmission reliant un levier de changement de vitesses à un verrou de sécurité pour boîtes de vitesses de véhicules automobiles**
Vorrichtung in einem Schaltgetriebe für Kraftfahrzeuge zum Einbau und Zerlegen eines Kabels, welches einen Schalthebel mit einer Sicherheitssperre verbindet
Device for mounting and dismantling a transmission cable connecting a gearshift lever to a security bolt in a motor vehicle gearbox

(30) Priorité: 16.03.1999 FR 9903227
(43) Date de publication de la demande: 20.09.2000
(73) Titulaire: Peugeot Citroen Automobiles SA, 92200 Neuilly sur Seine (FR)
(72) Inventeur: Ploe, Pierre, 25200 Montbeliard (FR)
(74) Mandataire: Thinat, Michel

(56) Documents cités:
- DE-A- 3 536 121
- DE-A- 19 509 475
- DE-A- 19 704 053
- US-A- 5 027 673
- PATENT ABSTRACTS OF JAPAN vol. 1995, no. 08, 29 septembre 1995 (1995-09-29) & JP 07 139625 A (AICHI MACH IND CO LTD;OTHERS: 01), 30 mai 1995 (1995-05-30)

## Description

La présente invention concerne un dispositif de montage et de démontage d'un organe de transmission, tel qu'un câble, reliant un levier de changement de vitesses à un verrou de sécurité pour boîtes de vitesses de véhicules automobiles.

On connaît des dispositifs de sécurité d'enclenchement de la marche arrière d'une boîte de vitesses de véhicules automobiles, comprenant un verrou à tige solidaire de la boîte de vitesses et donc du groupe moto-propulseur du véhicule, commandé par l'intermédiaire d'un organe de transmission, tel qu'un câble, reliant le levier de changement de vitesses monté sur la caisse du véhicule au verrou de sécurité. Le levier de changement de vitesses comporte une gâchette de verrouillage reliée à l'organe de transmission et permettant de sélectionner la marche arrière. Ainsi, en position inactive de la gâchette correspondant à la non-sélection de la marche arrière du véhicule, le verrou de sécurité interdit des passages involontaires en marche arrière. Pour sélectionner la marche arrière, le conducteur actionne manuellement la gâchette pour exercer un effort de traction sur l'organe de transmission qui actionne le verrou de sécurité pour permettre la sélection et le passage de la marche arrière.

Cependant, le mécanisme reliant l'organe de transmission au verrou de sécurité des dispositifs connus est tel qu'il ne permet pas de poser et de déposer facilement l'organe de transmission et, par conséquent, de permettre un montage et un démontage aisé du groupe moto-propulseur de la caisse du véhicule aussi bien en usine que lors d'une réparation à effectuer en atelier.

La présente invention résoud le problème technique ci-dessus posé en proposant un dispositif de montage et de démontage d'un organe de transmission, tel qu'un câble, reliant un levier de changement de vitesses à un verrou de sécurité pour boîtes de vitesses de véhicules automobiles, solidaire du carter de la boite de vitesses et interdisant le passage de la marche arrière lorsque le levier est en position de non-sélection de la marche arrière et qui est caractérisé en ce qu'il comprend un boîtier de liaison fixé amoviblement à une partie du corps du verrou extérieure au carter de la boîte de vitesses, contenant un mécanisme reliant l'organe de transmission, lié au boîtier, à la tige du verrou et comportant un moyen permettant le blocage du mécanisme de liaison dans le boîtier de liaison lors d'une opération de montage du boîtier à la partie externe de verrou ou de démontage du boîtier de la partie externe de ce verrou et lorsque ce dernier occupe sa position d'interdiction de passage de la marche arrière, le mécanisme de liaison étant agencé de façon à permettre, à la position d'interdiction de passage de la marche arrière, son engagement avec la tige de verrou lors du montage du boîtier à la partie extérieure du verrou ou son désengagement de la tige de verrou lors du retrait du boîtier de ce verrou.

Le boîtier de liaison comprend un corps de renvoi auquel est lié l'organe de transmission et un corps constituant un collier de fixation au verrou, comprenant deux parties dont l'une forme un couvercle verrouillé à l'autre partie et pouvant être déverrouillé de celle-ci pour un retrait radial du boîtier de liaison de la partie extérieure du verrou.

Le mécanisme de liaison est constitué par un levier et le moyen de blocage du levier comprend une saillie solidaire de la partie formant couvercle et coopérant avec une encoche du levier pour bloquer celui-ci en position déverrouillée de la partie formant couvercle.

Le levier est relié à la tige de verrou par un axe solidaire de la tige coaxialement à celle-ci et comportant une partie d'extrémité faisant saillie de la partie extérieure du verrou, et étant logée et ancrée dans une empreinte du levier conformée de façon à permettre l'introduction dans celle-ci de la partie d'extrémité de l'axe de liaison ou le retrait de celle-ci de la partie d'extrémité de cet axe radialement à celui-ci lors du montage ou du démontage du boîtier de liaison respectivement au verrou ou de celui-ci.

La saillie de blocage est désengagée de l'encoche du levier en position verrouillée de la partie formant couvercle à l'autre partie du boîtier constituant le collier de fixation.

De préférence, la saillie est en forme de lunule s'étendant dans un plan transversal à l'axe longitudinal du verrou.

Le corps formant collier de fixation comprend des gorges dans lesquelles sont logés respectivement des collets de la partie extérieure du verrou en position montée du boîtier de liaison à ce dernier.

La partie formant couvercle est de forme sensiblement semi-circulaire en section transversale et comprend à son extrémité opposée à l'articulation à l'autre partie du corps formant collier de fixation, une ou plusieurs languettes élastiques de verrouillage à l'autre partie dudit corps.

La partie formant couvercle comprend également un prolongement à paroi permettant d'obstruer au moins une partie de l'empreinte de logement de la partie d'extrémité de l'axe de liaison du verrou en position de verrouillage de la partie formant couvercle à l'autre partie du corps formant collier de fixation.

L'organe de transmission est accroché au mécanisme de liaison en sortant du boîtier de renvoi du même côté du verrou et formant un angle avec l'axe longitudinal du verrou.

Le levier présente la forme d'une plaque relativement épaisse située sensiblement dans un même plan passant par l'axe longitudinal du verrou et l'empreinte est réalisée dans un flanc du levier pour permettre radialement l'introduction de l'axe de liaison dans l'empreinte.

L'axe de liaison à la tige de verrou est monté à coulissement de façon étanche dans le corps du verrou à l'encontre de la force de rappel d'un ressort hélicoïdal de la tige vers sa position d'interdiction de passage de la marche arrière.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue en coupe longitudinale du dispositif de l'invention reliant un câble de transmission à un verrou de sécurité d'enclenchement de la marche arrière d'une boîte de vitesses du véhicule automobile et permettant un montage ou un démontage aisé du câble du verrou de sécurité.

La figure 2 est une vue en coupe semblable à celle de la figure 1 et représentant le dispositif de liaison en position verrouillée pour son montage au verrou de sécurité ou son démontage de celui-ci.

La figure 3 est une vue de côté du dispositif des figures 1 et 2.

La figure 4 est une vue de côté suivant la flèche IV de la figure 3 sans le verrou de sécurité.

La figure 5 est une vue de côté représentant le dispositif de liaison à une position permettant le démontage du dispositif du verrou de sécurité.

La figure 6 est une vue de côté suivant la flèche VI de la figure 5 sans le verrou de sécurité.

La figure 7 est une vue de côté représentant le dispositif de liaison en position démontée du verrou de sécurité.

En se reportant aux figures, la référence 1 désigne le carter d'une boîte de vitesses d'un véhicule automobile auquel est solidarisé un verrou de sécurité 2 à tige 3 permettant d'interdire le passage en marche arrière du véhicule lorsque le levier de changement de vitesses (non représenté) est en position de non-sélection de la marche arrière. Le levier de changement de vitesses comporte, comme cela est connu en soi, une gâchette qui peut être tirée manuellement pour exercer un effort de traction sur un organe de transmission 4, notamment un câble, pour commander le verrou de sécurité de telle façon qu'il autorise la sélection et le passage de la marche arrière. Les différentes parties constitutives de la boîte de vitesses permettant la sélection et le passage de la marche arrière par le verrou de sécurité 2 n'ont pas été représentées car ne faisant pas partie de l'invention et sont parfaitement connues par un homme du métier.

Selon l'invention, le verrou de sécurité 2 comprend un corps généralement cylindrique constitué d'une partie longiligne tubulaire 5 fixée de façon étanche, par un joint annulaire d'étanchéité 6, dans un perçage approprié 7 du carter 1 et d'une partie de plus grand diamètre 8 située à l'extérieur du carter 1 et ayant un épaulement 8a en appui sur une face dressée correspondante la du carter 1. La partie externe 8 du verrou 2 comporte sur sa périphérie une succession de gorges 8b et de collets 8c, dans le cas présent un seul collet 8c situé entre deux gorges 8b, et dont le rôle sera expliqué ultérieurement.

Le verrou de sécurité 2 comprend en outre une tige 9 solidaire coaxialement de la tige de verrouillage 3, montée à coulissement dans le corps du verrou 2 à l'encontre de la force de rappel d'un ressort hélicoïdal 10 rappelant la tige 3 à sa position d'interdiction de passage de la marche arrière. Le ressort 10 est monté précontraint entre un épaulement 3a de la tige 3 et un palier annulaire 11 fixé dans la partie externe 8 du verrou 2, un joint annulaire 12 assurant l'étanchéité entre la tige 9 et le palier 11.

La tige 9 a une partie d'extrémité 9a faisant saillie à l'extérieur du verrou 2 à l'opposé de la tige 3.

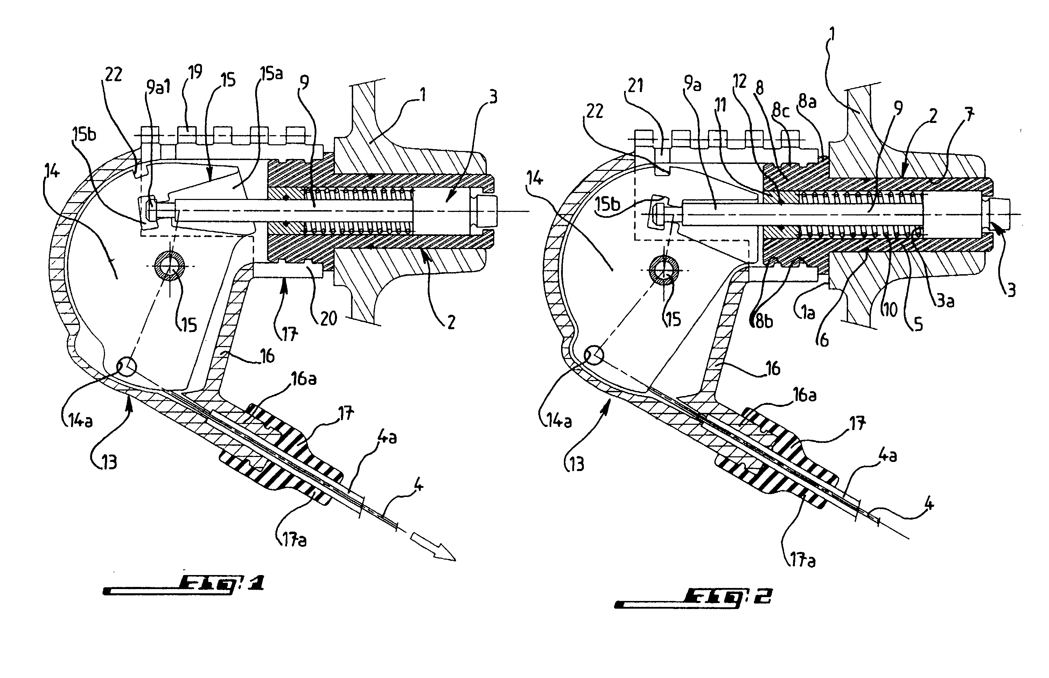

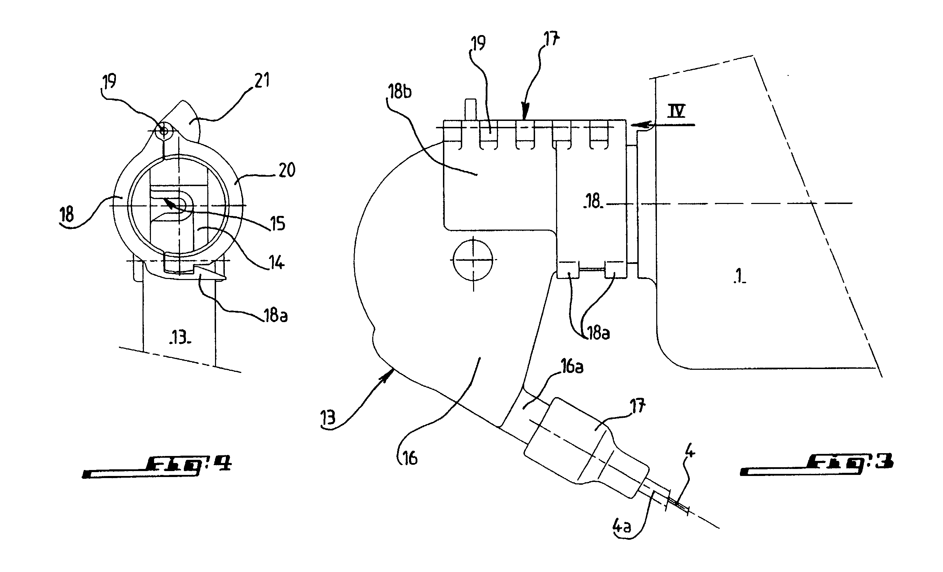

Le dispositif de liaison du câble de transmission 4 au verrou 2 comprend un boîtier de liaison 13 amoviblement fixé à la partie externe 8 du verrou 2 et dans lequel est logé un levier 14 en forme de plaque relativement épaisse monté pivotant sur un axe 15 s'étendant transversalement à l'axe longitudinal de l'axe 9 et donc du verrou 2 en dessous de celui-ci comme cela ressort notamment des figures 1 et 2. Le câble de transmission 4 est relié au levier 14 à sa partie opposée à l'axe 9 dont la partie d'extrémité 9a est logée dans une empreinte 15 réalisée dans le flanc du levier 14. L'empreinte 15 comporte une partie évasée 15a allant en s'élargissant vers la partie externe 8 du verrou 2 et permettant au levier 14 de pivoter autour de l'axe 15 relativement à l'axe de liaison 9 de ce verrou. L'empreinte 15 comprend en outre une partie en forme de T 15b prolongeant la partie évasée 15a et dans laquelle est logée l'extrémité en forme de T 9a1 de la partie d'extrémité 9a de l'axe de liaison 9. Ainsi, l'empreinte 15 débouche d'une face du levier 14, mais il est bien entendu qu'elle peut également être réalisée à travers toute l'épaisseur du levier 4 sans sortir du cadre de l'invention.

Le boîtier de liaison 13 comprend un corps de renvoi 16 auquel est lié le câble de transmission 4 et un corps 17 formant collier de fixation à la partie externe 8 du verrou 2.

Le câble de transmission 4 traverse une gaine 4a dont une extrémité est logée dans un perçage réalisé à travers une partie tubulaire de raccordement 16a du corps 16 en venant en butée sur le fond de ce perçage. Un manchon ou capuchon 17, réalisé en matériau élastique notamment à base de caoutchouc, est emmanché sur la partie tubulaire de raccordement 16a et a une partie tubulaire de plus petit diamètre 17a enserrant la gaine 4a pour la maintenir axialement dans la partie tubulaire 16a. Le câble de transmission 4 est ancré au levier 14 par tout moyen approprié, par exemple par une boule ou un cylindre d'extrémité (non représenté) engagé dans un orifice de retenue 14a réalisé dans le levier 14.

Le câble de transmission 4 sort du boîtier de raccordement 16 du même côté que celui où se trouve le verrou 2 et définit un angle déterminé relativement à l'axe longitudinal de ce verrou en s'éloignant de ce dernier.

Le corps formant collier de fixation 17 comprend deux parties dont l'une forme un couvercle 18 relié par une charnière d'articulation 19 à l'autre partie 20 et pouvant être verrouillé à cette dernière autour de la partie externe 8 du verrou 2 de façon à empêcher un déplacement axial du boîtier de liaison 13 relativement au corps du verrou 2 tout en autorisant une rotation relativement limitée du boîtier 13 par rapport au verrou 2.

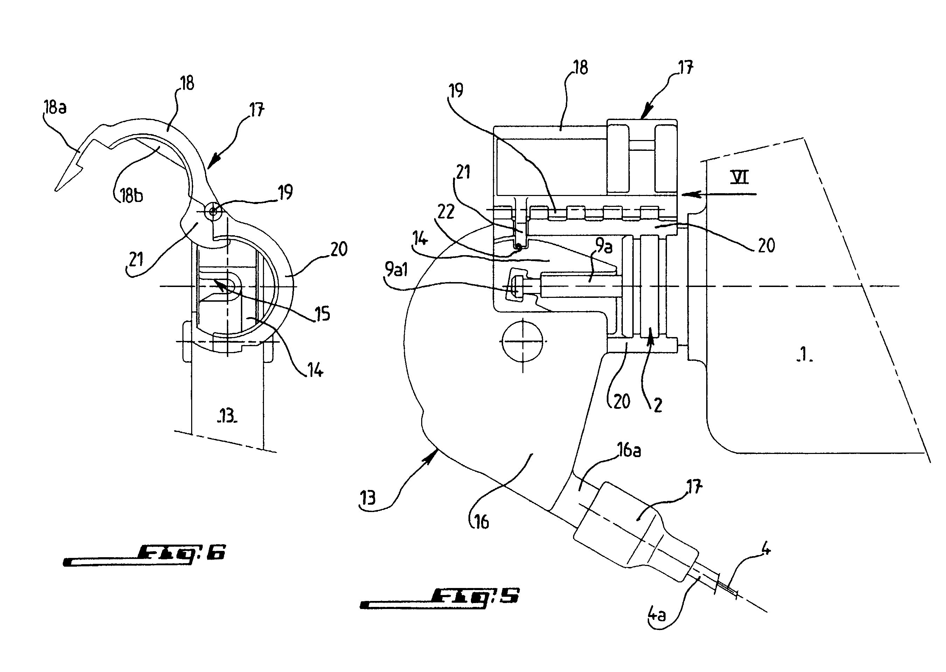

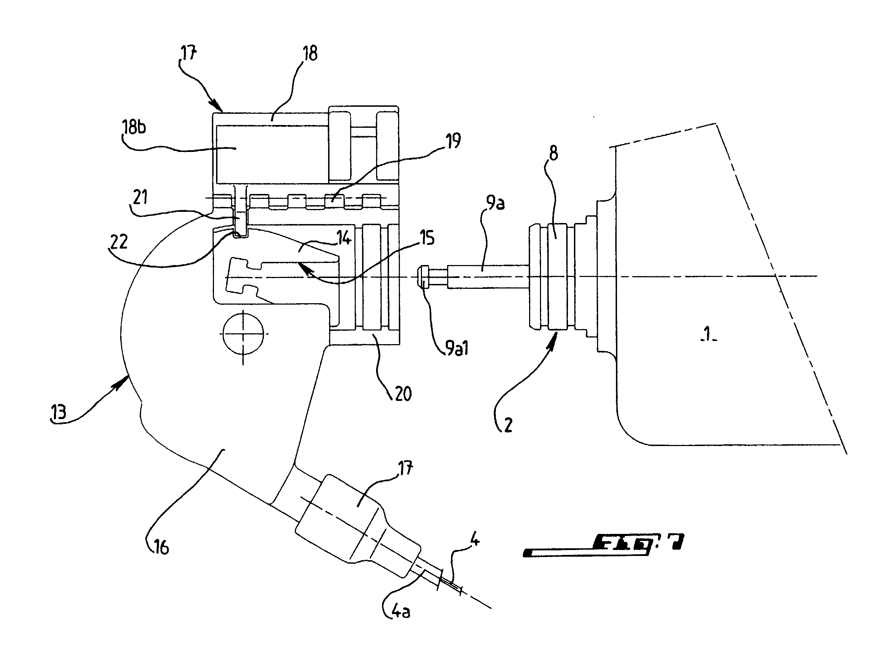

Comme cela ressort notamment des figures 4 et 6, les deux parties 18 et 20 du corps 17 présentent chacune, au niveau de la partie externe 8 du verrou 2, la forme d'une calotte cylindrique de façon à définir en position verrouillée l'une à l'autre une portion de cylindre pouvant entourer la partie externe 8 avec la partie 20 présentant en section transversale une longueur d'arc supérieur à celle de la partie 18. La partie 18 formant couvercle comporte deux languettes ou pattes élastiques 18a se terminant chacune par un bec de verrouillage de la partie 18 à la partie 20, les deux languettes élastiques 18a pouvant être manoeuvrées manuellement pour le déverrouillage de la partie formant couvercle 18 de la partie 20. La partie formant couvercle 18 est prolongée à son côté opposé au carter 1 par une paroi 18b de forme telle qu'en position verrouillée de la partie formant couvercle 18 à la partie 20, la paroi 18b obture pratiquement toute l'empreinte 15 du levier 14 afin d'empêcher le retrait de l'axe de liaison 9 de cette empreinte et donc d'emprisonner la partie d'extrémité 9a de l'axe 9 dans le levier 14. La partie 20 comporte dans sa face interne des gorges et des collets (non référencés) de formes conjuguées aux collets 8c et gorges 8b de la partie externe 8 du verrou 2 et en engagement mutuel avec eux en position verrouillée de la partie formant couvercle 18 pour la fixation du boîtier 13 au verrou 2.

La partie formant couvercle 18 comprend en outre une saillie 21 sensiblement en forme de lunule s'étendant dans un plan transversal à l'axe longitudinal du verrou 2 et pouvant s'engager, en position déverrouillée ou d'ouverture de la partie formant couvercle 18, dans une encoche ou entaille 22 réalisée en partie supérieure du levier 14 en considérant les figures 1 et 2, lorsque l'axe 3 du verrou 2 est en position interdisant le passage de la marche arrière. En position d'utilisation normale à laquelle le boîtier de liaison 13 est fixé au verrou 2, la saillie 21 est complètement désengagée de l'encoche 22 de façon que le levier 14 puisse déplacer axialement l'axe 9 et donc l'axe de verrouillage 3 dans un sens autorisant la sélection et le passage de la marche arrière lorsque la gâchette du verrouillage du levier de changement de vitesses a été actionnée pour exercer une traction sur le câble de transmission 4.

Pour démonter le boîtier de liaison 13 et donc le câble de transmission 4 du verrou de sécurité 2 lorsque ce dernier est en position interdisant le passage de la marche arrière, il suffit de saisir manuellement les deux languettes 18a et de les tirer pour les déverrouiller de la partie 20 du corps formant collier 17 et de faire pivoter la partie formant couvercle 18 autour de la charnière 19 dans son sens d'ouverture. Comme le levier 14 occupe sa position correspondant à la position d'interdiction de marche arrière du verrou 2, le mouvement d'ouverture de la partie formant couvercle 18 amène la saillie 21 a déjà s'engager dans l'encoche 22 du levier 14. A la position d'ouverture de la partie formant couvercle 18 représentée aux figures 5 et 6, l'empreinte 15 est découverte de sorte que l'opérateur peut alors retirer le boîtier 13 radialement à la partie d'extrémité 9a de l'axe de liaison 9 du verrou 2 dans un sens permettant de désengager cette partie d'extrémité de l'empreinte 15, la figure 7 représentant le boîtier 13 totalement désengagé du verrou de liaison 2. La figure 7 montre aussi que le levier 14 reste bloqué à sa position de retrait du verrou de liaison 2 par la saillie de blocage 21.

Pour monter à nouveau le boîtier 13 au verrou de sécurité 2, l'opérateur présente le boîtier 13 relativement au carter 1 de la boîte de vitesses de façon que la partie d'extrémité 9a de l'axe 9 se trouve en regard de l'empreinte 15 et le boîtier 13 est ensuite déplacé radialement à l'axe 9 de façon à introduire sa partie d'extrémité dans l'empreinte 15 et engager la partie 20 du corps formant collier 17 sur la partie extérieure 8 du verrou 2. Ensuite, l'opérateur rabat la partie formant couvercle 18 pour la verrouiller, par les languettes élastiques 18a, à la partie 20 de façon à verrouiller le boîtier de liaison 13 à la partie 8 du verrou 2. Lorsque la partie formant couvercle 18 est verrouillée à la partie 20, la saillie de blocage 21 est totalement désengagée de l'encoche 22 du levier 14 de façon que ce dernier puisse être actionné librement par le câble de transmission 4 lors d'une opération de sélection et de passage de la marche arrière.

Le dispositif de l'invention permet ainsi un montage ou un démontage rapide et sûr du câble de transmission du verrou de sécurité lors de la pose ou de la dépose du groupe moto-propulseur du véhicule. De plus, avant de monter le câble de transmission 4 au verrou de sécurité 2 ou lorsque ce câble est démonté du verrou pour effectuer une réparation, l'axe 9, étant accessible de l'extérieur, permet l'actionnement, manuel et automatique, du verrou de sécurité 2 pour commander la boîte de vitesses hors du véhicule. La présence du boîtier de liaison 13 permettant de relier le câble de transmission au verrou de sécurité permet de protéger le verrou des chocs pouvant résulter lors du transport de la boîte de vitesses avant et pendant le montage au groupe moto-propulseur du véhicule. Enfin, le dispositif de l'invention conduit à une réalisation compacte, est facilement manipulable, offre un montage aisé même dans des conditions d'accès ou de visibilité difficile et protège le verrou des boues et poussières.

## Revendications

1. Dispositif de montage et de démontage d'un organe de transmission (4), tel qu'un câble, reliant un levier de changement de vitesses à un verrou de sécurité (2) pour boîtes de vitesses de véhicules automobiles, solidaire du carter (1) de la boîte de vitesses et interdisant le passage de la marche arrière lorsque le levier est en position de non sélection de la marche arrière, **caractérisé en ce qu'**il comprend un boîtier de liaison (13) fixé amoviblement à une partie (8) du corps (5) du verrou (2) extérieure au carter (1) de la boîte de vitesses, contenant un mécanisme (14) reliant l'organe de transmission (4), lié au boîtier (13), à la tige de verrouillage (3) du verrou (2) et comportant un moyen (21) permettant le blocage du mécanisme de liaison (14) dans le boîtier de liaison (13) lors d'une opération de montage du boîtier (13) à la partie externe (8) du verrou (2) ou de démontage du boîtier (13) de la partie externe (8) du verrou (2) et lorsque ce dernier occupe sa position d'interdiction de passage de la marche arrière, le mécanisme de liaison (14) étant agencé de façon à permettre, à la position d'interdiction de passage de la marche arrière, son engagement avec la tige (3) du verrou (2) lors du montage du boîtier (13) au verrou (2) ou son désengagement de la tige (3) du verrou (2) lors du retrait du boîtier (13) du verrou (2).

2. Dispositif selon la revendication 1, **caractérisé en ce que** le boîtier de liaison (13) comprend un corps de renvoi (16) auquel est lié l'organe de transmission (4) et un corps (17) constituant un collier de fixation au verrou (2) comprenant deux parties (18, 20), dont l'une (18) forme un couvercle verrouillé à l'autre partie (20) et pouvant être déverrouillé de celle-ci pour permettre un retrait radial du boîtier de liaison (13) de la partie extérieure (8) du verrou (2).

3. Dispositif selon la revendication 2, **caractérisé en ce que** le mécanisme de liaison précité est constitué par un levier (14) et **en ce que** le moyen de blocage précité comprend une saillie (21) solidaire de la partie formant couvercle (18) et coopérant avec une encoche (22) du levier (14) pour bloquer celui-ci en position déverrouillée de la partie formant couvercle (18).

4. Dispositif selon la revendication 3, **caractérisé en ce que** le levier(14) est relié à la tige (3) du verrou (2) par un axe (9) solidaire de la tige (3) coaxialement à celui-ci et comportant une partie d'extrémité (9a) faisant saillie de la partie extérieure (8) du verrou (2) et étant logée et ancrée dans une empreinte (15) du levier (14) qui est conformée de façon à permettre l'introduction dans celle-ci de la partie d'extrémité (9a) de l'axe de liaison (9) ou le retrait de celle-ci de ladite partie d'extrémité (9a), radialement à l'axe de liaison (9) respectivement lors du montage ou du démontage du boîtier de liaison (13) au verrou (2) ou de celui-ci.

5. Dispositif selon la revendication 3 ou 4, **caractérisé en ce que** la saillie de blocage (21) est désengagée de l'encoche (22) du levier (14) en positon verrouillée de la partie formant couvercle (18) à la partie (20) du corps formant collier (17).

6. Dispositif sellon l'une des revendications 3 à 5, **caractérisé en ce que** la saillie de blocage (21) est en forme de lunule s'étendant dans un plan transversal à l'axe longitudinal du verrou (2).

7. Dispositif selon l'une des revendications 2 à 6, **caractérisé en ce que** le corps formant collier de fixation (17) comprend des gorges dans lesquelles sont logés respectivement des collets(8c) de la partie extérieure (8) du verrou (2) en position montée du boîtier de liaison (13) au verrou (2).

8. Dispositif selon l'une des revendications 2 à 7, **caractérisé en ce que** la partie formant couvercle (18) est de forme sensiblement semi-circulaire en section transversale pour permettre son engagement sur la partie extérieure (8) du verrou (2) et comprend à son extrémité opposée à l'articulation (19) à l'autre partie (20) du corps formant collier de fixation (17), une ou plusieurs languettes élastiques (18a) de verrouillage à l'autre partie (20) dudit corps.

9. Dispositif selon l'une des revendications 4 à 8, **caractérisé en ce que** la partie formant couvercle (18) comprend également un prolongement à paroi (18b) permettant d'obstruer au moins une partie de l'empreinte (15) dans laquelle est logée la partie d'extrémité (9a) de l'axe de liaison (9) du verrou (2), en positon de verrouillage de la partie formant couvercle (18) à l'autre partie (20) du corps formant collier de fixation (17).

10. Dispositif selon l'une des revendications 2 à 9, **caractérisé en ce que** l'organe de transmission (4) est accroché au mécanisme de liaison (14) en sortant du boîtier de renvoi (16) du même côté du verrou (2) en formant un angle avec l'axe longitudinal du verrou (2).

11. Dispositif selon l'une des revendications 4 à 10, **caractérisé en ce que** le levier (14) présente la forme d'une plaque relativement épaisse située sensiblement dans un même plan passant par l'axe longitudinal du verrou (2) et l'empreinte (15) est réalisée dans un flanc du levier (14) pour permettre le passage radial de la partie d'extrémité (9a) de l'axe de liaison (9) du verrou (2).

12. Dispositif selon l'une des revendications 4 à 11, **caractérisé en ce que** l'axe de liaison (9) à la tige (3) du verrou (2) est monté à coulissement de façon étanche dans le corps (5) du verrou (2) à l'encontre de la force de rappel d'un ressort hélicoïdal (10) de la tige (3) vers sa position d'interdiction de passage de la marche arrière.

13. Boîte de vitesses de véhicules automobiles, **caractérisée en ce qu'**elle est équipée d'un dispositif de montage et de démontage tel que défini dans l'une quelconque des revendications 1 à 12.

## Claims

1. Device for mounting and dismantling a transmission element (4), such as a cable, connecting a gearshift lever to a security bolt (2) for motor vehicle gearboxes that is rigidly fixed to the casing (1) of the gearbox and bars a shift into reverse gear when the lever is not in the reverse gear selection position, **characterised in that** it comprises a connection box (13) removably fixed to a part (8) of the body (5) of the bolt (2) external to the casing (1) of the gearbox, containing a mechanism (14) linking the transmission element (4) associated with the box (13) to the locking bar (3) of the bolt (2) and having a means (21) for jamming the linking mechanism (14) in the connection box (13) during the operation of mounting the box (13) on the external part (8) of the bolt (2) or of dismantling the box (13) from the external part (8) of the bolt (2) and when the latter occupies its reverse gear barring position, the linking mechanism (14) being arranged so as to permit, in the reverse gearshift barring position, its engagement with the bar (3) of the bolt (2) upon the mounting of the box (13) on the bolt (2) or its disengagement from the bar (3) of the bolt (2) upon withdrawal of the box (13) from the bolt (2).

2. Device according to Claim 1, **characterised in that** the connection box (13) comprises a diverter casing (16) to which the transmission element (4) is connected and a body (17) forming a clamp for fixing to the bolt (2), comprising two parts (18, 20) of which one part (18) forms a cover locked to the other part (20) and is unlockable therefrom to permit radial withdrawal of the connection box (13) from the external part (8) of the bolt (2).

3. Device according to Claim 2, **characterised in that** the said linking mechanism is formed by a lever (14) and **in that** the said jamming means comprises a cam (21) integral with the part forming the cover (18) and cooperating with a notch (22) in the lever (14) to jam the latter when the part forming the cover (18) is in the unlocked position.

4. Device according to Claim 3, **characterised in that** the lever (14) is connected to the bar (3) of the bolt (2) by a shaft (9) integral with the bar (3) and coaxial therwewith and having an end part (9a) projecting from the external part (8) of the bolt (2) and being lodged and anchored in a recess (15) in the lever (14) which is shaped so as to permit insertion of the end part (9a) of the connecting shaft (9) into the said recess or withdrawal of the said end part (9a) therefrom, radially with respect to the connecting shaft (9), upon mounting or dismantling, respectively, of the connection box (13) on to or from the bolt (2).

5. Device according to Claim 3 or Claim 4, **characterised in that** the jamming cam (21) is disengaged from the notch (22) in the lever (14) when the part forming the cover (18) is in the position in which it is locked to the part (20) of the body forming the clamp (17).

6. Device according to any one of Claims 3 to 5, **characterised in that** the jamming cam (21) is in the form of a crescent extending in a transverse plane with respect to the longitudinal axis of the bolt (2).

7. Device according to any one of Claims 2 to 6, **characterised in that** the body forming the fixing clamp (17) comprises grooves in which collars (8c) on the external part (8) of the bolt (2) are respectively lodged in the mounted position of the connection box (13) on the bolt (2).

8. Device according to any one of Claims 2 to 7, **characterised in that** the part forming the cover (18) is of substantially semicircular shape in cross section to enable it to engage on the external part (8) of the bolt (2) and comprises, at its opposite end to the hinge (19) to the other part (20) of the body forming the fixing clamp (17), one or more springy tongues (18a) for locking on to the other part (20) of the said body.

9. Device according to any one of Claims 4 to 8, **characterised in that** the part forming the cover (18) also comprises a wall extension (18b) enabling at least a part of the recess (15) in which the end part (9a) of the connecting shaft (9) of the bolt (2) lodges to be obstructed when the part forming the cover (18) is in the position in which it is locked to the other part (20) of the body forming the fixing clamp (17).

10. Device according to any one of Claims 2 to 9, **characterised in that** the transmission element (4) is fastened to the linking mechanism (14) where it emerges from the diverter casing (16) on the same side of the bolt (2), forming an angle with the longitudinal axis of the bolt (2).

11. Device according to any one of Claims 4 to 10, **characterised in that** the lever (14) is in the form of a relatively thick plate situated substantially in one plane passing through the longitudinal axis of the bolt (2) and the recess (15) is formed in a cheek of the lever (14) to permit the radial passage of the end part (9a) of the connecting shaft (9) of the bolt (2).

12. Device according to any one of Claims 4 to 11, **characterised in that** the connecting shaft (9) to the bar (3) of the bolt (2) is slidably mounted in a sealed fashion in the body (5) of the bolt (2) against the restoring force of a helical spring (10) urging the bar (3) towards its reverse gear shift barring position.

13. Motor vehicle gearbox **characterised in that** it is equipped with a mounting and dismantling device as defined in any one of Claim 1 to 12.

## Patentansprüche

1. Vorrichtung zum Montieren und Abmontieren eines Übertragungsorgans (4), wie etwa eines Seils, das einen Ganghebel mit einem Sicherheitsriegel (2) für Getriebe von Kraftfahrzeugen verbindet, das fest mit dem Gehäuse (1) des Getriebes verbunden ist und das Einlegen des Rückwärtsgangs dann verhindert, wenn der Hebel in der Nichtanwahlstellung des Rückwärtsgangs ist, **dadurch gekennzeichnet, dass** sie ein Verbindungsgehäuse (13) enthält, das abnehmbar an einem außerhalb des Getriebegehäuses (1) angeordneten Teil (8) des Körpers (5) des Riegels (2) befestigt ist, einen Mechanismus (14) aufweist, der das mit dem Gehäuse (13) verbundene Übertragungsorgan (4) mit der Verriegelungsstange (3) des Riegels (2) verbindet, und ein Mittel aufweist (21), mit dem der Verbindungsmechanismus (14) im Verbindungsgehäuse (13) gesichert werden kann, wenn das Gehäuse (13) am äußeren Teil (8) des Riegels (2) montiert bzw. das Gehäuse (13) vom äußeren Teil (8) des Riegels (2) abmoniert wird und wenn der letztgenannte seine Stellung einnimmt, in der das Einlegen des Rückwärtsgangs verhindert wird, wobei der Verbindungsmechanismus (14) so angeordnet ist, dass er in der Stellung, in der das Einlegen des Rückwärtsgangs verhindert wird, dessen Eingreifen mit der Stange (3) des Riegels (2) beim Montieren des Gehäuses (13) am Riegel (2) bzw. bei dessen Lösen von der Stange (3) des Riegels (2) beim Abziehen des Gehäuses (13) vom Riegel (2) ermöglicht.

2. Vorrichtung nach Anspruch 1, **dadurch gekennzeichnet, dass** das Verbindungsgehäuse (13) einen Umlenkkörper (16) enthält, mit dem das Übertragungsorgan (4) und ein Körper (17) verbunden sind, der einen Bund zum Befestigen am Riegel (2) bildet, welcher zwei Teile (18, 20) umfasst, von denen der eine (18) einen mit dem anderen Teil (20) verriegelten Deckel bildet, der von diesem entriegelbar ist, um einen radiales Abziehen des Verbindungsgehäuses (13) vom äußeren Teil (8) des Riegels (2) zu ermöglichen.

3. Vorrichtung nach Anspruch 2, **dadurch gekennzeichnet, dass** der genannte Verbindungsmechanismus aus einem Hebel (14) besteht und dass das vorgenannte Sicherungsmittel einen Vorsprung (21) enthält, der fest mit dem Deckelteil (18) verbunden ist und mit einer Aussparung (22) des Hebels (14) zusammenwirkt, um diesen in der Entriegelungsstellung des Deckelteils (18) zu sichern.

4. Vorrichtung nach Anspruch 3, **dadurch gekennzeichnet, dass** der Hebel (14) mit der Stange (3) des Riegels (2) durch eine Achse (9) verbunden ist, die koaxial zu diesem fest mit der Stange (3) verbunden ist und einen Endabschnitt (9a) enthält, der aus dem äußeren Teil (8) des Riegels (2) vorsteht und in einer Vertiefung (15) des Hebels (14) aufgenommen und verankert ist, die so ausgeformt ist, dass sie das Einführen des Endabschnitts (9a) der Verbindungsachse (9) in diese bzw. das Ausführen des genannten Endabschnitts (9a) aus dieser heraus radial zur Verbindungsachse (9) jeweils beim Montieren bzw. Abmontieren des Verbindungsgehäuses (13) am Riegel (2) bzw. von diesem ermöglicht.

5. Vorrichtung nach Anspruch 3 oder 4, **dadurch gekennzeichnet, dass** der Sicherungsvorsprung (21) aus der Aussparung (22) des Hebels (14) in der im Teil (20) des Bundkörpers (17) verriegelten Stellung des Deckelteils (18) freikommt.

6. Vorrichtung nach einem der Ansprüche 3 bis 5, **dadurch gekennzeichnet, dass** der Sicherungsvorsprung (21) halbmondförmig ist und sich in einer quer zur Längsachse des Riegels (2) verlaufenden Ebene erstreckt.

7. Vorrichtung nach einem der Ansprüche 2 bis 6, **dadurch gekennzeichnet**, das der Befestigungsbundkörper (17) Nuten enthält, in denen jeweilige Kragen (8c) des äußeren Teils (8) des Riegels (2) in am Riegel (2) montierter Stellung des Verbindungsgehäuses (13) aufgenommen sind.

8. Vorrichtung nach einem der Ansprüche 2 bis 7, **dadurch gekennzeichnet, dass** das Deckelteil (18) im Querschnitt im wesentlichen halbkreisförmig ist, um dessen Eingreifen am äußeren Teil (8) des Riegels (2) zu ermöglichen, und an seinem der Anlenkung (19) an das weitere Teil (20) des Befestigungsbundkörpers (17) gegenüberliegenden Ende eine oder mehrere Federzungen (18a) zum Verriegeln am anderen Teil (20) des Körpers enthält.

9. Vorrichtung nach einem der Ansprüche 4 bis 8, **dadurch gekennzeichnet, dass** das Deckelteil (18) auch eine Wandverlängerung (18b) enthält, mit der zumindest ein Teil der Vertiefung (15) verschließbar ist, in welcher der Endabschnitt (9a) der Verbindungsachse (9) des Riegels (2) in der am anderen Teil (20) des Befestigungsbundkörpers (17) verriegelten Stellung des Deckelteils (18) aufgenommen ist.

10. Vorrichtung nach einem der Ansprüche 2 bis 9, **dadurch gekennzeichnet, dass** das Übertragungsorgan (4) am Verbindungsmechanismus (14) eingehängt ist, indem es aus dem Umlenkgehäuse (16) auf der gleichen Seite des Riegels (2) austritt und dabei einen Winkel mit der Längsachse des Riegels (2) bildet.

11. Vorrichtung nach einem der Ansprüche 4 bis 10, **dadurch gekennzeichnet, dass** der Hebel (14) die Form einer relativ dicken Platte aufweist, die im wesentlichen in der gleichen Ebene liegt, die durch die Längsachse des Riegels (2) verläuft und dass die Vertiefung (15) in einer Flanke des Hebels (14) ausgeführt ist, um den radialen Durchtritt des Endabschnitts (9a) der Verbindungsachse (9) des Riegels (2) zu ermöglichen.

12. Vorrichtung nach einem der Ansprüche 4 bis 11, **dadurch gekennzeichnet, dass** die Verbindungsachse (9) zur Stange (3) des Riegels (2) in dichter Weise gleitend im Körper (5) des Riegels (2) entgegen der Rückholkraft einer Schraubenfeder (10) der Stange (3) zu dessen Stellung, in der das Einlegen des Rückwärtsgangs verhindert wird, montiert ist.

13. Kraftfahrzeuggetriebe, **dadurch gekennzeichnet, dass** es mit einer Vorrichtung zum Montieren und Abmontieren ausgestattet ist, wie in einem der Ansprüche 1 bis 12 definiert ist.
